# EUROPEAN PATENT SPECIFICATION

(11) **EP 3 623 129 B1**
(45) Date of publication and mention of the grant of the patent: **03.08.2022**
(21) Application number: 19182547.0
(22) Date of filing: 26.06.2019
(51) Int. Cl.: B28B 1/00, B28B 23/02, B33Y 10/00, B33Y 30/00, B29C 64/118, B29C 64/209, B29C 70/38

(54) **DEVICE FOR AUTOMATIC REINFORCEMENT OF STRUCTURES, AND METHOD FOR AUTOMATIC REINFORCEMENT OF STRUCTURES**
VORRICHTUNG ZUR AUTOMATISCHEN VERSTÄRKUNG VON STRUKTUREN UND VERFAHREN ZUR AUTOMATISCHEN VERSTÄRKUNG VON STRUKTUREN
DISPOSITIF ET PROCÉDÉ DE RENFORCEMENT AUTOMATIQUE DE STRUCTURES

(30) Priority: 14.09.2018 PL 42701618
(43) Date of publication of application: 18.03.2020
(73) Proprietor: REbuild Sp. z o.o., 15-540 Bialystok (PL)
(72) Inventor: Rzadkowski, Witold Wojciech, 05-825 Grodzisk Mazowiecki (PL); Perz, Rafal Andrzej, 11-400 Ketrzyn (PL); Suprynowicz, Karol, 16-200 Dabrowa Bialostocka (PL); Waldykowski, Michal, 04-696 Warszawa (PL); Kowalik, Michal Piotr, 05-825 Grodzisk Mazowiecki (PL)
(74) Representative: AOMB Polska Sp. z.o.o.

(56) References cited:
- EP-A1- 2 803 475
- EP-A1- 3 536 491
- WO-A1-01/96223
- CN-A- 106 738 190
- CN-A- 107 756 594
- US-A1- 2005 067 731
- US-A1- 2009 229 760
- US-A1- 2013 174 969
- US-A1- 2017 341 300

## Description

The invention concerns the technique for the reinforcing of structures that are made with the use of concrete, especially devices for automatic reinforcement, as well as the method for the reinforcing of structures, especially with the use of the device according to the invention.

In the construction industry, reinforcement of concrete structures is required because the tensile strength of concrete is many times lower compared to its compressive strength. In bending elements, such as ceilings or lintels, there occurs both compression and tension, which enforces the use of reinforcement. In connection with the progressing automation of the process of erection of buildings and constructions, there is also an economically justified need to automate the process for the laying of reinforcement.

In the prior art, various types of devices can be found which try to provide automation of work when laying reinforcement fibres. For example, the American application US2018093373 A1 describes a comprehensive device for automatic execution of buildings and constructions. It consists of a large-sized 3D printer, which is adapted to the controlled pouring of concrete layers. According to this document, reinforcements are laid using a multi-axis, multi-purpose manipulator, which is able to place metal bars in the produced structure and even weld them together. However, the proposed method for reinforcement with the use of the described device is difficult to implement, because the device according to this invention is large, very expensive, and (though it can be suitable for the erecting of large constructions, such as power plants) it is not suitable for smaller-scale applications, such as residential houses.

Document WO0151730 A1 proposes a new type of reinforcement bars made of fibres immersed in resin and formed into various shapes. However, this document provides for the laying of bars made of new materials that are similar to the laying of well-known metal bars, i.e. creating of a (spatial) reinforcement structure and pouring of concrete over it. This is disadvantageous in that it requires human intervention to produce the spatial reinforcement, due to which it does not allow full automation of the process of creating a reinforced building.

Document WO2014153535 A2 describes incremental creation of structures using fibres which, after being combined with thermoplastic resin, can be used to create 3D structures. However, the document does not consider the use of such fibres with a resin matrix to reinforce concrete structures at all, and describes the use of thermosetting resins without considering the benefits of using chemosetting resins.

Application US2017028644 A1 describes a method for in situ creation of two-component composites for the purposes of creating lightweight structures (aircraft parts, wind turbine blades). However, it does not consider the use of the produced composite in connection with concrete, and a composite that only has two components is far from sufficient when it comes to being able to ensure adequate strength parameters and bonding of reinforcement to concrete.

Publication entitled "Experimental Exploration of Metal Cable as Reinforcement in 3D Printed Concrete" by Freek P. Bos, Zeeshan Y. Ahmed, Evgeniy R. Jutinov, Theo A. M. Salet, Materials, 2017, which constitutes the closest prior art relative to this invention, describes attempts to incrementally produce concrete structures in which the reinforcement fibre would be laid together with the concrete filament - in the centre of the filament. Unfortunately, such a solution is not suitable due to the problem with the proper laying of reinforcement - very thin fibres turn out to be too weak, thicker fibres tend to slip out of the concrete filament, and every type of fibre has a tendency to straighten up, which limits the creatable shapes of the concrete structures reinforced in this way. Moreover, the placing of the fibre inside the concrete filament makes it difficult to hind the reinforcement fibres together, thus reducing the achievable strength of the entire reinforced structure.

CN106738190 A discloses a device for automatic reinforcement of structures in accordance with the preamble of claim 1.

In view of the above, it is evident that the prior art lacks devices that would enable quick and cheap in situ production of composite reinforcements for concrete structures using relatively small-sized equipment, and that there are no described methods for achieving such reinforcement.

The object of the invention is the device for automatic reinforcement of structures, in accordance with claim 1.

Preferably, on the endpiece of the manipulator there is a nozzle that deposits the concrete mortar.

Preferably, the device has the means for cleaning the hardener mixing chamber and pumps assembly and/or the nozzle of the gluing assembly, preferably blowing through or flushing out.

Preferably, the device has a light-emitting module, which is preferably directed towards the outlet of the reinforcement fibre from the saturator.

Preferably, the device has an assembly that sprinkles - with aggregate - the reinforcement being laid, preferably including a vibratory conveyor.

Preferably, the nozzle that deposits the concrete mortar is placed at a distance from the means for laying the fibre on the surface of the structure being reinforced, and this nozzle is configured so that the point of exit of the reinforcement fibre from the means for laying the fibre on the surface of the structure being reinforced is entirely outside the outlet of the nozzle that deposits the concrete mortar.

The method according to the invention for automatic reinforcement of structures is implemented using the device according to the invention, wherein the following steps are performed using the remote-controlled device:
a) a bundle of the reinforcement fibre, unwound from the storage unit, is lowered until it comes into contact with the surface of the element being reinforced;
b) the bundle of the reinforcement fibre is attached to the surface of the element being reinforced, by its end, by applying - using the nozzle of the gluing assembly - a small amount of glue, preferably quick-setting glue;
c) the bundle of the reinforcement fibre is embraced by the saturator;
d) the supply of the hardening mixture from the containers with resin and hardener to the saturator begins, using the hardener mixing chamber and pumps assembly;
e) the printhead - mounted on the endpiece of the manipulator - is moved, placing the saturated reinforcement fibre on the surface being reinforced;
f) the reinforcement fibre is cut by the cutting knife.
   Preferably, after the reinforcement fibre is cut according to step f), the following step is carried out
g) the end of the reinforcement fibre is covered in glue, especially glue deposited through the nozzle (9).

Preferably, when laying the saturated reinforcement fibre according to step e), the resin-coated reinforcement fibre - which is being laid on the surface of the element being reinforced - is sprinkled with aggregate.

Preferably, the resin is formed into irregular shapes, locally oversaturating the reinforcement fibres.

Preferably, in the case of using photocurable resins, during step e) and/or after cutting off the reinforcement fibre according to step f), the laid reinforcement fibre is exposed to light, especially UV light.

Preferably, before beginning to reinforce the surface of the element, projections are created on this surface, especially by previously forming these projections from concrete and/or putting pegs in this surface, especially made of metal, plastic, concrete, or aerated concrete,
wherein, during step e), the reinforcement fibre is laid on the surface being reinforced around at least some of the projections.

Preferably - after steps a) to f) and possibly g) have been carried out one time or many times, and after the first layer of reinforcement has been created on the surface of the concrete base - auxiliary posts are created,
after which steps a) to f) and possibly g) of the method are carried out again, during which a second layer of reinforcement is laid, whose reinforcement fibres run both on the surface of the concrete base and on the surface of the auxiliary posts, wherein, additionally, glue joints are created between the reinforcement fibres of the first layer of reinforcement and the reinforcement fibres of the second layer of reinforcement.

Preferably, after laying the second layer of reinforcement, steps a) to f) and possibly g) of the method are carried out again, during which a third layer of reinforcement is laid on top of the auxiliary posts, wherein glue joints are created at the places where the reinforcement fibres of the second layer of reinforcement and the third layer of reinforcement meet.

Preferably, after the second layer of reinforcement has been laid, a layer of concrete is poured over the surface being reinforced up to the level of the top of the auxiliary posts.

### Description of the drawing figures

The invention shall be described in more detail in relation to the enclosed drawing in which:
Fig. 1 shows an example configuration of the device for automatic reinforcement of structures,
Fig. 2 shows an example laying of the reinforcement fibre, basically flat, and
Fig. 3 presents an example spatial laying of the reinforcement fibre.

List of items marked in the figures:
1 - endpiece of the manipulator
2 - reinforcement fibre storage unit
3 - guide rollers
4 - drive rollers
5 - cutting knife
6 - saturator
7 - containers with resin and hardener
8 - hardener mixing chamber and pumps assembly
9 - nozzle of the gluing assembly
10 - gluing of the beginning of the reinforcement bar
11 - reinforcement bar
12 - nozzle that deposits the concrete mortar
21 - concrete structure
22 - concrete projections
23 - attachment of the beginning of the reinforcement bar
24 - reinforcement bar
25 - attachment of the end of the bar (optional)
30 - concrete base (printed earlier)
31 - auxiliary posts (printed after the first layer of reinforcement)
32 - filling of the empty space with concrete
33 - first layer of reinforcement (before the posts)
34 - glue joint
35 - second layer of reinforcement (after the posts)
36 - third layer of reinforcement (after filling in)

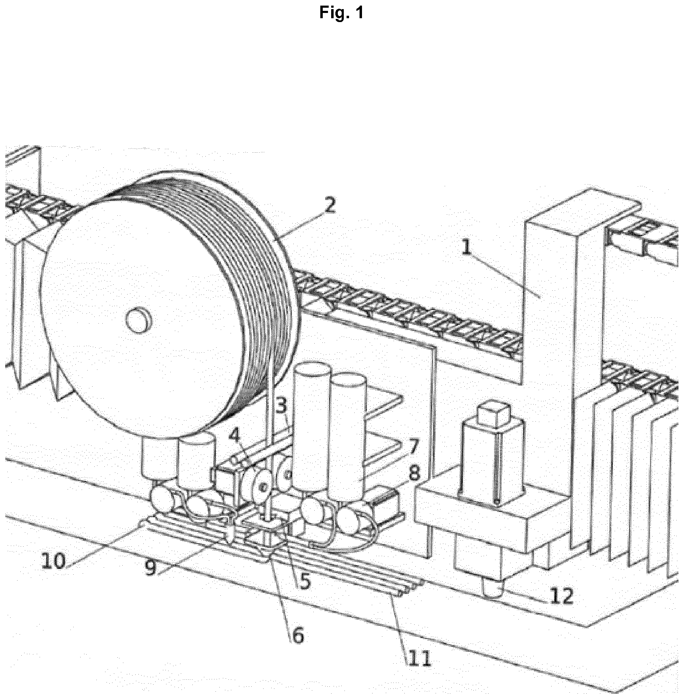

Most importantly, the device for automatic reinforcement of structures has a printhead, which is presented in an example configuration in Fig. 1, and which is placed on the endpiece of the manipulator (1). The manipulator has been presented as an element similar to a typical structure known in 3D printing technology, which (element) moves on a gantry, thanks to which it is possible for the printhead to move along the line of the gantry. The gantry itself can be moved horizontally in a direction that is transverse to the longitudinal direction of the gantry, as well as vertically (lifted/lowered). A structure that uses a system of several gantries is suitable for the device according to the invention, but it is equally possible to mount the head on the arm of a multi-axis robot or on any other prior art device intended for precisely moving a head in three directions.

Among the elements of the printhead that are presented in Fig. 1, an important element is the reinforcement fibre storage unit (2). The storage unit (2) has been presented in the form of a reel with fibre wound onto it, which can rotate freely allowing the reinforcement fibre to unwind. Although the storage unit (2) has been presented as a round reel, it is possible for it to have a different shape, e.g. that of a prism with a hexagonal, octagonal, or similar section.

Next to the reinforcement fibre storage unit (2) there are the guide rollers (3), which can take the form of cylinders that are preferably narrowed in the middle so that - as the fibre is unwound from the storage unit (2) - the reinforcement fibre can pass stably between the guide rollers (3) without sliding out beyond the guide rollers (3).

Next to the guide rollers (3) (in Fig. 1 below), there are drive rollers (4), which are in the form of cylinders, preferably narrowed in the middle, and which are driven by electric motors. The drive rollers (4) can be made of or covered with a material that increases the adherence of the rollers to the reinforcement fibre, as well as they can also be mounted close to each other so that the clearance between the drive rollers (4) is smaller than the transverse dimension of the reinforcement fibre. The mounting of the rollers (4) can be 'permanent' or can allow for some cushioning, e.g. using springs, spring washers, etc., so that the reinforcement fibre is not unnecessarily crushed when moving between the drive rollers (4). The role of the drive rollers (4) is to move the reinforcement fibre in a controlled fashion, which (fibre) is unwound from the storage unit (2) under the influence of the movement of the drive rollers (4), and which (fibre) passes through the guide rollers (3) and is then moved next to the cutting knife (5) towards the saturator (6).

The cutting knife (5), which can be seen in Fig. 1, is used to cut the reinforcement fibre (e.g. after the laying of a specific line of reinforcement has been finished), and can take any form. In Fig. 1, the cutting knife (5) has been presented as an element in the form of a flat piece of metal with a hole in it, where the hole is not much larger than the reinforcement fibre (only so that the fibre does not rub against the flat piece of metal when passing next to the cutting knife). Near the surface of the flat piece of metal there is an electrically controlled blade. However, the cutting knife (5) can take any other form, such as that of an inverted cone with a cutting blade placed from below (ensuring a stable position of the reinforcement fibre after cutting) or that of a sleeve with a blade inside the sleeve (an ordinary straight blade, or one that works like the shutter in photo cameras). It is important that the blade of the cutting knife (5) be made of a material that is durable enough to withstand repeated cutting of the reinforcement fibre without becoming blunt (e.g. an iron blade is not suitable for cutting fibres made of aramid) - it should be made of e.g. tool steel, titanium, tungsten carbide, etc.

Next to the cutting knife (5) there is the saturator (6), where the reinforcement fibre comes into contact with the substance that saturates the reinforcement fibre, especially resin. The saturator (6) can be any prior art saturator designed for the saturating of glass or carbon roving, or it can be a structure that uses the gravity force - in such a case, it takes the form of a funnel divided into two or more parts preferably made of elastic material, e.g. rubber or silicone rubber. The reinforcement fibre - under the influence of the drive rollers (4) - is pressed through the saturator (6), thanks to which the surface of the reinforcement fibre gets covered in resin, while any excess resin is collected from the fibre at the narrowed part of the saturator (6).

The saturator (6) is located near the outlet of the hardener mixing chamber, which constitutes a part of the hardener mixing chamber and pumps assembly (8) presented in Fig. 1. The assembly (8) is connected to the containers with resin and hardener (7), preferably two of them. Thanks to the use of two different containers for resin and hardener, on the one hand it is possible to better adjust the final composition of the resin that comes into contact with the reinforcement fibre in the saturator (6) (by planning the hardening duration, hardening temperature, permitted moisture, or even the method for hardening the reinforcement - chemical, UV light, etc.) and, on the other hand, it is possible to increase the service life of the substances in the containers (7) (since some substances can retain their properties for many days when stored separately, but, after mixing, may set within minutes). The containers can be either in the form of tanks permanently connected to the head (which would require regular cleaning in order to prevent clogging), or in standard form, e.g. that of bottles supposed to be replaced after their contents have run out. The substances stored in the containers can be any substances that, together, fulfil the role of hardeners with the desired physical and chemical properties, preferably acrylic, epoxy, or phenolic resins. Each of the containers is connected via a hose to the pump, from which the hoses come out that combine in the hardener mixing chamber, which, preferably, is a labyrinth mixer.

The reinforcement fibre, after passing through the saturator (6), is already covered with the hardening mixture and is near the surface on which it is supposed to be laid. After coming into contact with the surface, it adheres to it and forms the reinforcement bar (11) marked in Fig. 1. Such a reinforcement bar (11) can be laid in parallel rows that are placed close to each other (as shown in Fig. 1), or may form any other structures or patterns (zigzags, a lattice, etc.).

The device presented in Fig. 1 also has - on the head - the nozzle of the gluing assembly (9), which nozzle is used to glue the beginning of the reinforcement fibre to the surface on which it is to be laid and, possibly, to attach the end of a specific part of the reinforcement fibre. Preferably, the gluing assembly has one or two containers (depending on whether one- or preferably two-component glue is used, especially quick-setting glue), and one or two pumps (e.g. peristaltic pumps or progressive cavity pumps) respectively. If two-component glue is used, then the nozzle of the gluing assembly (9) is preceded by a mixing chamber, especially a labyrinth chamber.

Alternatively, thermoplastic can be used instead of glue. The head will then consist of a heated nozzle, a container with the plastic in the form of pellets or a reel of wire, and a drive that presses the wire into the heated nozzle.

An additional element of the printhead of the device according to the invention may be the nozzle that deposits the concrete mortar (12). Its integration with the head that deposits the reinforcement may ensure full automation of the erection of reinforced concrete structures using a single device - in such a case, the stages of depositing a layer of concrete and creating the reinforcement happen in an alternate fashion. What is more, due to the need to ensure high precision of the manipulator - on whose endpiece (1) the head for depositing the reinforcement is located - integration of the nozzle (12) with the head that deposits the reinforcement may ensure greater accuracy of the process of depositing subsequent concrete layers.

It is obvious that - due to the great freedom of configuration of the printhead's shape as well as of selection of materials (reinforcement fibres, glue, hardener) - many simple modifications of the head of the device according to the invention are possible. For example, if photocurable resins were used, then it would be preferable to place a light-emitting module (e.g. a UV LED) on the head, at a place that would allow effective illumination directed towards the reinforcement being laid.

Optionally, if the fibres being laid are saturated with thermoplastic, the head may have an additional nozzle that blows-in compressed air in order to cool down the reinforcement being laid. It may be preferable to use compressed air at an additionally reduced temperature, e.g. by applying a vortex tube.

Another optional solution - in the case where the fibres are saturated with a thermosetting binder - they can be hardened by being heated with an infrared radiator, a visible light radiator, a microwave radiator, hot air supply, or by means of electromagnetic excitation of eddy currents for fibres that conduct electric current.

In order to control the temperature for both thermosetting, thermoplastic binders and chemosetting binders (in whose case the correctness and duration of the hardening process depend on the temperature), the heating or cooling process can be carried out while being feedbacked with a thermal imaging camera or a contactless temperature sensor.

In turn, when it comes to selection of the most suitable ingredients for various applications, it may transpire to be preferable to use appropriate additives that reduce the flammability of the plastic contained in the reinforcement bar (11), e.g. melamine derivatives, ammonium polyphosphate, aluminium hydroxide (typically mixed in a ratio of 1:1 with epoxy resin), tetrabromobisphenol A (for epoxy resins), antimony(lll) oxide.

Moreover, even though reinforcement fibre mixed with a hardener has been described and presented in Fig. 1, it is possible to use thermoplastic fibre, which would be stored on a reel too, but which would then be directed to a heated nozzle and plasticized there prior to depositing on the surface being reinforced.

Another preferable additional module of the head of the device according to the invention is an assembly that sprinkles the fibre being laid with aggregate, e.g. glass aggregate or another granular material. The sprinkling with aggregate of the fibre being laid that has not been hardened yet increases its later adherence to the concrete with which the fibre is supposed to be covered later. The assembly that sprinkles with aggregate can preferably take the form of vibratory conveyors well known in prior art, activated at the right time - especially after a bundle of reinforcement has been laid and after the fibre has been cut off by the cutting knife (5). However, it is necessary that the aggregate be deposited on the reinforcement fibre before the fibre hardens, so that it can adhere to its surface.

Additional preferable elements of the device according to the invention that have not been presented in Fig. 1 are compressors / channels that supply compressed air, and containers with solvent(s) together with pumps and supply hoses. During the operation of the device according to the invention, neither the saturator (6) nor the hardener/glue mixers run continuously. Therefore, substances may dry in the saturator or the mixers, or even in the hoses through which the substances flow. This is why preferably the device additionally has (a) compressor(s) with hoses connected to the places that are the most susceptible to clogging, in order to periodically blow them through. Optionally, the device can have (an) assembly(-ies) that dose(s) (a) solvent(s) for the purposes of flushing out the places that are the most susceptible to clogging.

The process of cleaning the elements of the head (by both blowing them through and flushing them out with a solvent) preferably happens outside the place where the reinforcement is being created (when the manipulator moves the head out of the working area), e.g. so that drops of the solvent do not weaken the already created reinforcement.

Thanks to the fact that the bars are laid in unhardened form, the adhesion between the base and the reinforcement bar is increased compared to traditional solutions, and, additionally, freedom of the reinforcement's shape is achieved, which allows to use less material while keeping the same strength parameters.

Since the material, which plays the role of the binder, can still be in liquid form during the laying of the reinforcement bar, the bar becomes glued to the other bars that were laid earlier and now intersect it. This solution eliminates the need to bind the fibres of the reinforcement, which is very time-consuming in the case of traditional reinforcements.

The process of laying the reinforcement - using the device according to the invention - starts with lowering a bundle of reinforcement fibre until it comes into contact with the element being reinforced, using drive rollers (4), and then attaching the bundle using a small amount of quick-setting glue deposited with the nozzle (9).

Once the bundle of the fibre has been attached to the element being reinforced, the fibre is embraced by the saturator (6) and the head is moved by the manipulator thus laying the bundle of the saturated fibre on the surface of the element being reinforced.

When the laying of the bundle of the fibre has been completed, the fibre is cut by the cutting knife (5) and then the end of the laid fibre can additionally be covered with glue from the nozzle (9).

After the reinforcement has been laid, it is poured over with concrete, or covered with concrete by means of the nozzle of a device that builds using an incremental technique.

In order to increase the adhesion of the reinforcement to the concrete mix, it is possible to apply a sprinkling of the still-liquid saturant with aggregate, or to form the resin into irregular shapes by locally oversaturating the fibres.

Another known method is to braid the main bundle of the reinforcement with an additional fibre - the achieved helix on the surface of the fibre increases its adhesion to the concrete mix. The use of such an additionally braided reinforcement fibre would make it necessary to expand the device, at least by adding an additional reel for the braiding bundle, guiding means, and a socket in which the braiding bundle would come into contact with the reinforcement fibre - such a modification is possible, and, for an expert, it would not be difficult to select appropriate elements from among the already-known devices, guides, etc.

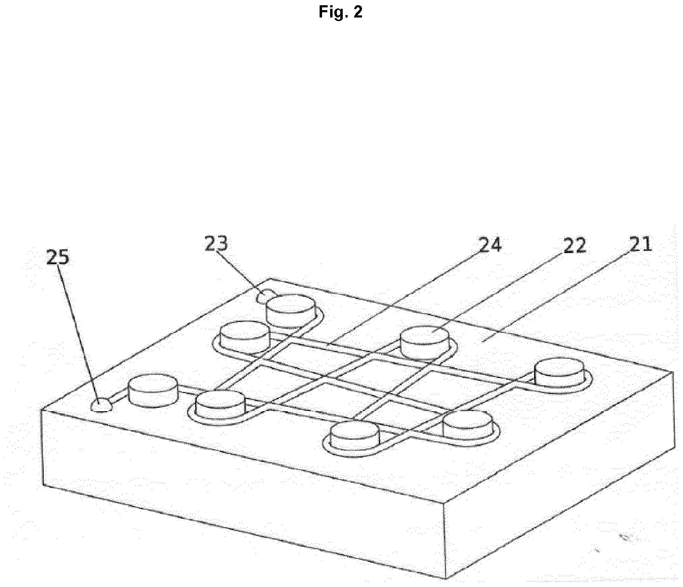

Application of the device in combination with incremental-building techniques also allows to create the auxiliary structure that can be seen in Fig. 2. On the surface of the concrete structure (21), concrete projections (22) were created around which the fibre being laid was wrapped thus creating the reinforcement bar (24) with a complex pattern practically impossible to easily produce using traditional metal reinforcement bars. However, thanks to the device according to the invention, it is possible to create such a structure - importantly - with the use of a single, continuous reinforcement fibre (one cycle of attaching the fibre, laying it, cutting it off, and possibly gluing the end of the fibre).

Directional changes in the reinforcement, and tensioning of the fibre can be ensured by means of pegs placed in the structure. The pegs can be placed by means of a dedicated head and can be made of, e.g., metal, plastic, concrete, or aerated concrete. They can also be made in situ by a machine, e.g. from a concrete mix, or from foams.

In the case of pre-tensioning of the fibre, it may be necessary to use a saturator of increased strength (because, in this case, this is the last element from which the fibre gets out onto the surface being reinforced, so it would also be the element bearing the most load) or to use an additional element such as a fixed ring that would tension the fibre during the creation of pre-tensioned patterns of the reinforcement.

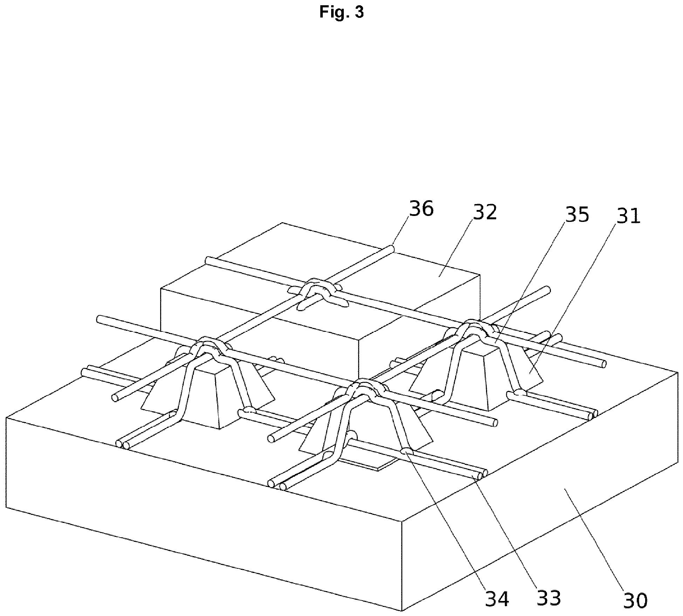

It is also possible to achieve a spatial structure of the reinforcement by making the concrete superstructures depicted in Fig. 3, onto whose surfaces the reinforcement is laid.

In the presented example, the possibilities for the precise creation of concrete structures with incremental techniques and for the free laying of reinforcement with the device according to the invention are fully taken advantage of. First of all, on the previously produced concrete base (30), the first (usually flat) layer of reinforcement fibres is laid, thus forming the first layer of the reinforcement (33). Then, e.g. using the nozzle (12), auxiliary posts (31) are created, thus covering a part of the first layer of the reinforcement (33). Once the auxiliary posts (31) are sufficiently dry/hardened, the second layer of reinforcement is laid (35), which is now a spatial structure - the fibres of this layer are laid on the concrete base (30) where (at least in some places) they are glued with the first layer of the reinforcement (33), and at the places where there are auxiliary posts (31) the fibres of layer 35 are laid on their surface (running up on the walls, passing on their surface, coming down on the other side again towards the base (30)). Optionally, at the intersections, they can be additionally bonded with each other, e.g. by means of glue joints (34). After the second layer of the reinforcement has been created (35), the base (30) together with the posts (31) is poured over with the next layer of concrete that reaches approximately the upper end of the posts (31) (so that at least a part of the second layer of the reinforcement (35) protrudes above the level of the filling (32)). At this stage, it is possible to lay the third layer of the reinforcement (36), attached to the second layer of the reinforcement (35) by joints (34) at the points of contact with the second layer of the reinforcement. In this way, a structure of reinforcement is achieved in which the lower layer of the reinforcement (the first one - 33) is permanently connected to the upper layer of the reinforcement (36) through an intermediate layer of the reinforcement (the second one - 35) using the joins (34).

There are many other possible ways of creating three-dimensional reinforcement structures - e.g. by changing the order of the scheme described above, and first creating the third layer of the reinforcement (36) before the filling (32) is poured. In this way of proceeding, the fibres of the third layer of the reinforcement (36) should first be attached (for example) to one of the posts (31), and then they should be run - in the tensioned state - all the way to the next post (31), where they would be bonded to the fibres (that already exist there) by means of the joint (34), and so on. Preferably, the maximum distance between the consecutive posts (31) on which the reinforcement fibre would be supposed to be suspended is less than 1m.

Preferable materials for the laying of reinforcements using the device according to the invention are glass, carbon, basalt, aramid, diolen, or other fibres, which can then be saturated with a chemosetting saturant mixture, thermoplastic, photocurable plastic, or thermosetting plastic.

The device according to the invention has been designed, among other things, to be used as a component of systems for the automatic erection of constructions using additive techniques.

## Claims

1. A device for automatic reinforcement of concrete structures, which has:
- a manipulator with the means for precisely moving it in space,
- a printhead located on the endpiece of the manipulator (1),
- a reinforcement fibre storage unit (2) in the form of a reel, located on the printhead,
wherein the reinforcement fibre storage unit (2) is connected to the means for laying the fibre on the surface of the structure being reinforced, where said means have drive rollers (4) and a cutting knife (5),
**characterized in that**
there are guide rollers (3) placed between the reinforcement fibre storage unit (2) and the drive rollers (4), which guide rollers preferably have rotation axes perpendicular to the rotation axes of the drive rollers (4),
and **in that** it has a saturator (6) positioned so that the reinforcement fibre first passes next to the cutting knife (5) and then through the saturator (6), as well as it contains two containers with resin and hardener (7) connected to a hardener mixing chamber and pumps assembly (8), wherein the outlet of the hardener mixing chamber is directed towards the saturator (6),
wherein furthermore it has a glue tank, a glue pump, and a nozzle of the gluing assembly (9), wherein the nozzle of the gluing assembly (9) faces the same direction as the outlet of the saturator (6).

2. The device for automatic reinforcement of structures according to claim 1, **characterized in that** on the endpiece of the manipulator there is a nozzle that deposits the concrete mortar (12).

3. The device for automatic reinforcement of structures according to claim 1, **characterized in that** it has the means for cleaning the hardener mixing chamber and pumps assembly (8) and/or the nozzle of the gluing assembly (9), preferably blowing through or flushing out.

4. The device for automatic reinforcement of structures according to claim 1, 2 or 3, **characterized in that** it has a light-emitting module, which is preferably directed towards the outlet of the reinforcement fibre from the saturator (6).

5. The device for automatic reinforcement of structures according to claim 1, 2, 3 or 4, **characterized in that** it has an assembly that sprinkles - with aggregate - the reinforcement being laid, preferably including a vibratory conveyor.

6. The device for automatic reinforcement of structures according to claim 1, 2, 3, 4 or 5, **characterized in that** the nozzle that deposits the concrete mortar is placed at a distance from the means for laying the fibre on the surface of the structure being reinforced, and this nozzle is configured so that the point of exit of the reinforcement fibre from the means for laying the fibre on the surface of the structure being reinforced is entirely outside the outlet of the nozzle that deposits the concrete mortar (12).

7. The method for automatic reinforcement of concrete structures, implemented using the device according to any of the previous claims 1 to 6, **characterized in that** the following steps are carried out with the use of a remote-controlled device:
a) a bundle of the reinforcement fibre, unwound from the storage unit (2), is lowered until it comes into contact with the surface of the element being reinforced;
b) the bundle of the reinforcement fibre is attached to the surface of the element being reinforced, by its end, by applying - using the nozzle of the gluing assembly (9) - a small amount of glue, preferably quick-setting glue;
c) the bundle of the reinforcement fibre is embraced by the saturator (6);
d) the supply of the hardening mixture from the containers with resin and hardener (7) to the saturator (6) begins, using the hardener mixing chamber and pumps assembly (8);
e) the printhead - mounted on the endpiece of the manipulator (1) - is moved, placing the saturated reinforcement fibre on the surface being reinforced;
f) the reinforcement fibre is cut by the cutting knife (5) and then optionally the following step is taken:
g) the end of the reinforcement fibre is covered in glue, especially glue deposited through the nozzle of the gluing assembly (9).

8. The method for automatic reinforcement of concrete structures according to claim 7, **characterized in that** the resin is formed into irregular shapes, locally oversaturating the reinforcement fibres and/or when laying the saturated reinforcement fibre according to step e) the resin coated reinforcement fibre - which is being laid on the surface of the element being reinforced - is sprinkled with aggregate.

9. The method for automatic reinforcement of concrete structures according to claim 7 or 8, **characterized in that** in the case of using photocurable resins, during step e) and/or after cutting off the reinforcement fibre according to step f), the laid reinforcement fibre is exposed to light, especially UV light.

10. The method for automatic reinforcement of concrete structures according to claim 7, 8 or 9, **characterized in that** before beginning to reinforce the surface of the element, projections (22) are created on this surface, especially by previously forming these projections (22) from concrete and/or putting pegs in this surface, especially made of metal, plastic, concrete, or aerated concrete,
where, during step e), the reinforcement fibre is laid on the surface being reinforced around at least some of the projections (22).

11. The method for automatic reinforcement of concrete structures according to claim 7, 8, 9 or 10, **characterized in that** after steps a) to f) and possibly g) have been carried out one time or many times, and after the first layer of reinforcement (33) has been created on the surface of the concrete base (30) - auxiliary posts (31) are created, after which steps a) to f) and possibly g) of the method are carried out again, during which a second layer of reinforcement (35) is laid, which reinforcement fibres run both on the surface of the concrete base (30) and on the surface of the auxiliary posts (31), and, additionally, glue joints (34) are created between the reinforcement fibres of the first layer of reinforcement (33) and the reinforcement fibres of the second layer of reinforcement (35), preferably after laying the second layer of reinforcement (35),
steps a) to f) and possibly g) of the method are carried out again, during which a third layer of reinforcement (36) is laid on top of the auxiliary posts (31), wherein glue joints (34) are created at the places where the reinforcement fibres of the second layer of reinforcement (35) and the third layer of reinforcement (36) meet
or
a layer of concrete is poured over the surface being reinforced up to the level of the top of the auxiliary posts (31).

## Patentansprüche

1. Eine Vorrichtung zur automatischen Verstärkung von Betonbauwerken, umfassend:
- ein Manipulator mit den Mitteln, um ihn präzise im Raum zu bewegen,
- ein Druckkopf, der sich am Endstück des Manipulators (1) befindet,
- eine Verstärkungsfaserspeichereinheit (2) für Verstärkungsfasern in Form einer Spule, die sich auf dem Druckkopf befindet,
wobei die Verstärkungsfaserspeichereinheit (2) mit der Einrichtung zum Ablegen der Faser auf der Oberfläche der zu verstärkenden Struktur verbunden ist, wobei die Einrichtung Antriebswalzen (4) und ein Schneidmesser (5) aufweist,
**dadurch gekennzeichnet, dass**
zwischen dem Verstärkungsfaserspeicher (2) und den Antriebsrollen (4) Führungsrollen (3) angeordnet sind, die vorzugsweise Drehachsen senkrecht zu den Drehachsen der Antriebsrollen (4) aufweisen,
und dass sie einen Sättiger (6) aufweist, der so positioniert ist, dass die Verstärkungsfaser zuerst neben dem Schneidmesser (5) und dann durch den Sättiger (6) hindurchgeht, sowie zwei Behälter mit Harz und Härter (7), die verbunden sind zu einer Härter-Mischkammer und Pumpenanordnung (8), wobei der Auslass der Härter-Mischkammer auf den Sättiger (6) gerichtet ist, wobei es außerdem einen Klebertank, eine Kleberpumpe und eine Düse der Klebevorrichtung (9) aufweist, wobei die Düse der Klebevorrichtung (9) in die gleiche Richtung weist wie der Auslass des Sättigers (6).

2. Vorrichtung zur automatischen Verstärkung von Bauwerken nach Anspruch 1, **dadurch gekennzeichnet, dass** am Endstück des Manipulators eine Düse vorhanden ist, die den Betonmörtel (12) aufträgt.

3. Vorrichtung zur automatischen Verstärkung von Bauwerken nach Anspruch 1, **dadurch gekennzeichnet, dass** sie Mittel zum Reinigen des Härtermischkammer und Pumpenaggregats (8) und/oder der Düse des Klebevorrichtung (9), vorzugsweise Durchblasen oder Ausspülen, aufweist.

4. Vorrichtung zur automatischen Verstärkung von Bauwerken nach Anspruch 1, 2 oder 3, **dadurch gekennzeichnet, dass** sie ein Leuchtmodul aufweist, das vorzugsweise auf den Austritt der Verstärkungsfaser aus dem Sättiger (6) gerichtet ist.

5. Vorrichtung zur automatischen Verstärkung von Bauwerken nach Anspruch 1, 2, 3 oder 4, **dadurch gekennzeichnet, dass** sie eine die zu verlegende Verstärkung - mit Zuschlagstoff - bestreuende Anordnung, vorzugsweise mit einem Schwingförderer, aufweist.

6. Vorrichtung zur automatischen Verstärkung von Bauwerken nach Anspruch 1, 2, 3, 4 oder 5, **dadurch gekennzeichnet, dass** die Düse, die den Betonmörtel aufbringt, in einem Abstand von den Mitteln zum Aufbringen der Faser auf der Oberfläche des zu bewehrenden Bauwerks angeordnet ist , und diese Düse so konfiguriert ist, dass der Austrittspunkt der Verstärkungsfaser aus den Mitteln zum Auflegen der Faser auf die Oberfläche der zu bewehrenden Struktur vollständig außerhalb des Auslasses der Düse liegt, die den Betonmörtel (12) aufträgt.

7. Verfahren zur automatischen Verstärkung von Betonstrukturen, das unter Verwendung der Vorrichtung nach einem der vorhergehenden Ansprüche 1 bis 6 durchgeführt wird, **dadurch gekennzeichnet, dass** die folgenden Schritte unter Verwendung einer ferngesteuerten Vorrichtung ausgeführt werden:
a) ein von der Speichereinheit (2) abgewickeltes Bündel der Verstärkungsfaser wird abgesenkt, bis es mit der Oberfläche des zu verstärkenden Elements in Kontakt kommt;
b) das Bündel der Verstärkungsfaser wird an der Oberfläche des zu verstärkenden Elements an seinem Ende befestigt, indem - unter Verwendung der Düse der Klebevorrichtung (9) - eine kleine Menge Klebstoff, vorzugsweise schnell abbindender Klebstoff, aufgetragen wird;
c) das Bündel der Verstärkungsfaser wird vom Sättiger (6) umschlossen;
d) die Zufuhr der Härtermischung aus den Behältern mit Harz und Härter (7) zum Sättiger (6) beginnt unter Verwendung der Härtermischkammer und der Pumpenbaugruppe (8);
e) der Druckkopf - montiert am Endstück des Manipulators (1) - wird bewegt und platziert die gesättigte Verstärkungsfaser auf der zu verstärkenden Oberfläche;
f) die Verstärkungsfaser wird durch das Schneidmesser (5) geschnitten und dann gegebenenfalls der folgende Schritt durchgeführt:
g) das Ende der Verstärkungsfaser ist mit Klebstoff bedeckt, insbesondere mit Klebstoff, der durch die Düse der Klebevorrichtung (9).

8. Verfahren zur automatischen Verstärkung von Betonstrukturen nach Anspruch 7, **dadurch gekennzeichnet, dass** das Harz zu unregelmäßigen Formen geformt wird, wodurch die Verstärkungsfasern lokal übersättigt werden und/oder beim Verlegen der gesättigten Verstärkungsfaser gemäß Schritt e) die harzbeschichtete Verstärkungsfaser - die wird auf die Oberfläche des zu bewehrenden Elements gelegt - mit Zuschlag bestreut.

9. Verfahren zur automatischen Verstärkung von Betonbauwerken nach Anspruch 7 oder 8, **dadurch gekennzeichnet, dass** im Falle der Verwendung von photohärtbaren Harzen während Schritt e) und/oder nach dem Abschneiden der Verstärkungsfaser gemäß Schritt f) die verlegte Verstärkungsfaser ist Licht ausgesetzt, insbesondere UV-Licht.

10. Verfahren zur automatischen Verstärkung von Betonbauwerken nach Anspruch 7, 8 oder 9, **dadurch gekennzeichnet, dass** vor Beginn der Verstärkung der Oberfläche des Elements Vorsprünge (22) auf dieser Oberfläche erzeugt werden, insbesondere durch vorheriges Formen dieser Vorsprünge (22) aus Einbetonieren und/oder Einstecken von Dübeln in diese Fläche, insbesondere aus Metall, Kunststoff, Beton oder Porenbeton,
wobei während Schritt e) die Verstärkungsfaser auf die zu verstärkende Oberfläche um mindestens einige der Vorsprünge (22).

11. Verfahren zur automatischen Verstärkung von Betonbauwerken nach Anspruch 7, 8, 9 oder 10, **dadurch gekennzeichnet, dass** nach einmaliger oder mehrfacher Durchführung der Schritte a) bis f) und ggf. g) und nach der ersten Verstärkungsschicht (33) auf der Oberfläche des Betonsockels (30) erstellt wurde - Hilfspfosten (31) erstellt, wonach die Schritte a) bis f) und ggf. g) des Verfahrens erneut durchgeführt werden, währenddessen eine zweite Verstärkungsschicht (35) verlegt wird, welche Verstärkungsfasern sowohl auf der Oberfläche des Betonsockels (30) als auch auf der Oberfläche der Hilfspfosten (31) verlaufen und zusätzlich Klebeverbindungen (34) zwischen den Verstärkungsfasern entstehen der ersten Verstärkungsschicht (33) und den Verstärkungsfasern der zweiten Verstärkungsschicht (35), vorzugsweise nach dem Verlegen der zweiten Verstärkungsschicht (35),
die Schritte a) bis f) und ggf. g) des Verfahrens erneut durchgeführt werden, wobei eine dritte Verstärkungsschicht (36) auf die Hilfspfosten (31) gelegt wird, wobei Klebeverbindungen (34) an den Stellen erzeugt werden, wo die Verstärkungsfasern der zweiten Verstärkungsschicht (35) und der dritten Verstärkungsschicht (36) aufeinandertreffen
oder
eine Betonschicht wird über die zu verstärkende Oberfläche bis zur Höhe der Oberseite der Hilfspfosten (31) gegossen.

## Revendications

1. Dispositif pour le renforcement automatique de structures en béton, qui comporte :
- un manipulateur avec des moyens pour le déplacer précisément dans l'espace,
- une tête d'impression située sur l'embout du manipulateur (1),
- une unité (2) de stockage de fibres de renforcement sous forme de bobine, située sur la tête d'impression,
dans lequel l'unité de stockage de fibres de renforcement (2) est reliée aux moyens pour déposer la fibre sur la surface de la structure à renforcer, lesdits moyens ayant des rouleaux d'entraînement (4) et un couteau de coupe (5),
**caractérisé en ce que**
des rouleaux de guidage (3) sont placés entre l'unité de stockage de fibres de renforcement (2) et les rouleaux d'entraînement (4), lesquels rouleaux de guidage ont de préférence des axes de rotation perpendiculaires aux axes de rotation des rouleaux d'entraînement (4),
et **en ce qu'**il comporte un saturateur (6) positionné de sorte que la fibre de renforcement passe d'abord à côté du couteau de coupe (5) puis à travers le saturateur (6), ainsi qu'il contient deux récipients avec résine et durcisseur (7) reliés à une chambre de mélange de durcisseur et un ensemble de pompes (8), dans lequel la sortie de la chambre de mélange de durcisseur est dirigée vers le saturateur (6),
dans lequel il comporte en outre un réservoir de colle, une pompe à colle et une buse de l'ensemble de collage (9), dans lequel la buse de l'ensemble de collage (9) fait face à la même direction que la sortie du saturateur (6).

2. Dispositif de renforcement automatique de structures selon la revendication 1, **caractérisé en ce que** sur l'embout du manipulateur se trouve une buse qui dépose le mortier de béton (12).

3. Dispositif de renforcement automatique de structures selon la revendication 1, **caractérisé en ce qu'** il comporte des moyens de nettoyage de la chambre de mélange de durcisseur et de l'ensemble pompes (8) et/ou de la buse de l'ensemble d'encollage (9), de préférence par soufflage ou rinçage.

4. Dispositif de renforcement automatique de structures selon la revendication 1, 2 ou 3, **caractérisé en ce qu'** il comporte un module d'émission de lumière, qui est de préférence dirigé vers la sortie de la fibre de renforcement du saturateur (6).

5. Dispositif de renforcement automatique de structures selon la revendication 1, 2, 3 ou 4, **caractérisé en ce qu'**il comporte un ensemble qui arrose - de granulat - le renforcement en cours de pose, comprenant de préférence un convoyeur vibrant.

6. Dispositif de renforcement automatique de structures selon la revendication 1, 2, 3, 4 ou 5, **caractérisé en ce que** la buse qui dépose le mortier de béton est placée à distance des moyens de pose de la fibre sur la surface de la structure à renforcer, et cette buse est configurée pour que le point de sortie de la fibre de renfort des moyens de pose de la fibre sur la surface de la structure à renforcer soit entièrement à l'extérieur de la sortie de la buse qui dépose le mortier de béton (12).

7. Procédé de renforcement automatique de structures en béton, mis en oeuvre à l'aide du dispositif selon l'une quelconque des revendications précédentes 1 à 6, **caractérisé en ce que** les étapes suivantes sont réalisées à l'aide d'un dispositif télécommandé:
a) un faisceau de fibres de renforcement, déroulé de l'unité de stockage (2), est abaissé jusqu'à ce qu'il entre en contact avec la surface de l'élément à renforcer;
b) le faisceau de fibres de renforcement est fixé à la surface de l'élément à renforcer, par son extrémité, en appliquant - à l'aide de la buse de l'ensemble de collage (9) - une petite quantité de colle, de préférence à prise rapide;
c) le faisceau de fibres de renforcement est entouré par le saturateur (6);
d) l'alimentation du mélange durcissant depuis les conteneurs avec résine et durcisseur (7) vers le saturateur (6) commence, en utilisant l'ensemble chambre de mélange durcisseur et pompes (8);
e) la tête d'impression - montée sur l'embout du manipulateur (1) - est déplacée, plaçant la fibre de renforcement saturée sur la surface à renforcer;
f) la fibre de renforcement est coupée par le couteau de coupe (5) puis éventuellement l'étape suivante est effectuée:
g) l'extrémité de la fibre de renfort est recouverte de colle, notamment de colle déposée par la buse de l'ensemble d'encollage (9).

8. Procédé de renforcement automatique de structures en béton selon la revendication 7, **caractérisé en ce que** la résine est façonnée en formes irrégulières, sursaturant localement les fibres de renforcement et/ou lors de la pose de la fibre de renforcement saturée selon l'étape e) la fibre de renforcement enrobée de résine - qui est posé sur la surface de l'élément à renforcer - est saupoudré d'agrégat.

9. Procédé de renforcement automatique de structures en béton selon la revendication 7 ou 8, **caractérisé en ce que** dans le cas de l'utilisation de résines photodurcissables, lors de l'étape e) et/ou après découpe de la fibre de renfort selon l'étape f), la fibre de renfort posée est exposé à la lumière, en particulier aux rayons UV.

10. Procédé de renforcement automatique d'ouvrages en béton selon la revendication 7, 8 ou 9, **caractérisé en ce qu'** avant de commencer à renforcer la surface de l'élément, on crée des saillies (22) sur cette surface, notamment en formant préalablement ces saillies (22) à partir de béton et/ou pose de piquets dans cette surface, notamment en métal, plastique, béton ou béton cellulaire,
où, au cours de l'étape e), la fibre de renforcement est déposée sur la surface à renforcer autour d'au moins certaines des saillies (22).

11. Procédé de renforcement automatique de structures en béton selon la revendication 7, 8, 9 ou 10, **caractérisé en ce qu'**après que les étapes a) à f) et éventuellement g) ont été réalisées une ou plusieurs fois, et après la première couche de renfort (33) a été créé sur la surface de la base en béton (30) - des poteaux auxiliaires (31) sont créés, après quoi les étapes a) à f) et éventuellement g) du procédé sont à nouveau effectuées, au cours desquelles une deuxième couche renfort (35) est posée, lesquelles fibres de renfort courent à la fois sur la surface de la base en béton (30) et sur la surface des poteaux auxiliaires (31), et, de plus, des joints de colle (34) sont créés entre les fibres de renfort de la première couche de renfort (33) et les fibres de renfort de la seconde couche de renfort (35), de préférence après pose de la seconde couche de renfort (35),
les étapes a) à f) et éventuellement g) du procédé sont réalisées à nouveau, au cours desquelles une troisième couche de renfort (36) est posée au-dessus des poteaux auxiliaires (31), dans laquelle des joints de colle (34) sont créés au niveau endroits où les fibres de renfort de la deuxième couche de renfort (35) et de la troisième couche de renfort (36) se rencontrent
ou
une couche de béton est coulée sur la surface à renforcer jusqu'au niveau du sommet des poteaux auxiliaires (31).
